# EUROPÄISCHE PATENTSCHRIFT

(11) **EP 0 975 237 B1**
(45) Veröffentlichungstag und Bekanntmachung des Hinweises auf die Patenterteilung: **05.09.2001**
(21) Anmeldenummer: 98914695.6
(22) Anmeldetag: 15.04.1998
(51) Int. Cl.: A23L 2/52

(54) **GETRÄNK, KONZENTRAT-KOMBINATION SOWIE VERFAHREN ZUR HERSTELLUNG EINES GETRÄNKES**
BEVERAGE, COMBINATION OF CONCENTRATES AND METHOD FOR PRODUCING A BEVERAGE
BOISSON, COMBINAISON DE CONCENTRES ET PROCEDE DE PRODUCTION D'UNE BOISSON

(30) Priorität: 16.04.1997 AT 65597
(43) Veröffentlichungstag der Anmeldung: 02.02.2000
(73) Patentinhaber: Husz, Georg Bela, 2542 Kottingbrunn (AT)
(72) Erfinder: Husz, Georg Bela, 2542 Kottingbrunn (AT)
(74) Vertreter: Wildhack, Helmut, Dr. Dipl.-Ing.
(86) Internationale Anmeldenummer: AT9800095
(87) Internationale Veröffentlichungsnummer: WO9846092

(56) Entgegenhaltungen:
- WO-A-96/13179
- GB-A- 2 122 491

## Beschreibung

Die vorliegende Erfindung betrifft ein neues Getränk, das im wesentlichen der Gruppe der heute insbesondere bei jüngeren und im Berufsleben engagierten Personen in ihrer Beliebtheit immer noch steigenden Getränke mit anregender Wirkung zuzurechnen ist.

Die Zahl der auf diesem Segment des Getränkemarktes oft mit raschem Wechsel angebotenen Getränke ist so groß, daß es schwierig ist, hier eine systematische Übersicht über den Stand der Technik und künftige Entwicklungen zu gewinnen.

Prinzipiell ist jedoch davon auszugehen, daß die Grundlage der in ihrer Überzahl nicht alkoholhältigen Getränke durch Wasser gebildet ist, und daß sie - jeweils alternativ oder zusammen und jeweils in wechselnden Mengen - als wesentliche Bestandteile Coffein, Mineralsalze, Lebensmittelsäuren und Aromen sowie eventuell Ascorbinsäure enthalten, welche letztere oft ganz ausschlaggebend sein können für Akzeptanz oder Ablehnung eines Getränkes, und das nicht selten sogar noch gesplittert nach geschlechtsmäßiger, altersmäßiger und/oder sozialer Zugehörigkeit des Konsumenten.

Es ist eine größere Anzahl von Publikationen bekannt geworden, welche derartige anregende Getränke oder Getränke-Kompositionen beschreiben, wobei Coffein, Ascorbinsäure und Eisen-Verbindungen für die gewünschte Wirkung des Getränks wesentliche Kern-Komponenten bilden und eine Menge verschiedener ergänzender Komponenten einzeln oder in beliebigen Kombinationen miteinander zusätzlich vorgesehen sein kann. Diese bekannten, ergänzenden Komponenten in Getränken sind u.a. Vitamine, Salze des Magnesiums, Calciums, Natriums und/oder Kaliums, Süßstoffe, organische und/oder anorganische Säuren, Fruchtaromen, selbstverständlich auch oft Kohlendioxid u.dgl.

So beschreibt die EP 397232 A1 mit Vitaminen und Mineralstoffen verstärkte Getränke, welche Vitamin A in Form von β-Karotin, Vitamin C und Riboflavin enthalten. Die Getränke weisen gesteigerte Mengen an Calcium und Eisen auf, wobei das Eisen in Form eines Zucker-Komplexes oder als Gluconat-Ascorbat-Komplex, weiters als Malat, Citrat, Ascorbat und/oder Tartrat vorliegen kann. Es sind in den dort beschriebenen, sich durch hohe Stabilität der Vitamine auszeichnenden, Getränken weiters Dextrin, Gummi Acacia, Sucrose, Fructose, Glucose, Maissirup u.dgl. einzeln oder in beliebiger Kombination miteinander enthalten. Als weitere Komponenten sind in den Getränken Säfte verschiedener heimischer oder exotischer Früchte vorgesehen, weiters Zucker-Alkohole, Vitamine der B-Gruppe, künstliche Süßstoffe, Coffein und Kohlensäure-Wasser. Der pH-Wert beträgt beispielsweise 2,5 bis 5.

Die EP 511587 A1 betrifft eine schlankheits-fördernde "eßbare" Zusammensetzung, welche als Speise oder als Getränk vorliegen kann und zum Fettabbau im Körper beitragen soll. Sie enthält zumindest eine Aminosäure bzw. deren diätetisch annehmbare Salze, zumindest ein Xanthin-Derivat und zumindest eine Thiamin-Verbindung. Das Xanthin-Derivat kann Coffein, Theophyllin oder Theobromin sein. Weitere Komponenten in einer dort geoffenbarten Formulierung als Getränk sind Metallsalze, Zitronensäure, Citrate, Vitamine der B-Reihe, Maltitol, Saccharin, Aspartam und/oder Aromastoffe.

Die WO-A-9613179 beschreibt Getränke-Zusammensetzungen, welche Coffein, Vitamin C und eine Eisenverbindung enthalten. Ziel dieser Mischungen ist es, eine gesteigerte Aufmerksamkeit zu erreichen.

Die WO 91/12734 (PCT/US 91/12734) hat Getränke-Zusammensetzungen bzw. Konzentrate für menschlichen Genuß zum Gegenstand, welche neben der Wasser-Basis physiologisch wichtige Elektrolyte, Mineralstoffe, Kohlehydrate, Süßstoffe und Genußsäure-Komponenten enthalten. Die dort beschriebenen Getränke sollen insbesondere zum Ausgleich von Flüssigkeits-Verlusten im Körper, z.B. infolge von Hitze oder sportlicher Betätigung dienen.

Einige weitere Komponenten dieser Getränke sind Eisen, Natrium, Kalium, Calcium, Magnesium, Chlorid, Bicarbonate, Phosphate, Vitamin C, Vitamin E, Fructose, Glucose, organische Säuren wie Citronensäure, und anorganische Säuren wie Citronensäure.

Es wurde nun gefunden, daß die Zugabe oder das Fehlen einer einzigen, allein oft völlig unauffälligen Komponente dafür entscheidend sein kann, wie die Wirkung des Getränkes, seien es nun Sympathie und Antipathie, die Geschwindigkeit des Wirkungseintritts selbst und/oder die Dauer des Anhaltens der Wirkung vom einzelnen Konsumenten und dann selbstverständlich einer eventuellen Mehrheit der Konsumenten, subjektiv empfunden wird. Dazu gehört, wenn auch auf dem Sektor dieser Getränke erst vielleicht in zweiter Linie, die Fähigkeit des Getränkes, ein unter Umständen nur unterschwelliges Durstempfinden, wenn möglich, nachhaltig zu befriedigen.

Die Erfindung hat sich nun die Aufgabe gestellt, ein Getränk zu schaffen, das nach Konsum die Leistungsfähigkeit in ihrer vollen Breite erhält oder moderat steigert, gleichzeitig aber im Konsumenten ein Gefühl einer allgemeinen Wohlbefindlichkeit zu generieren und für geraume Zeit auch aufrechtzuerhalten imstande ist.

Im Zuge der Entwicklung wurde nun eine an sich bekannte Substanz gefunden, welche in äußerst geringer Konzentration und in einem sorgfältig abgestimmten Umfeld der übrigen Getränke-Komponenten, einem Getränk die oben global spezifizierten Wirkungsmerkmale zu verleihen imstande ist.

Gegenstand der Erfindung ist somit ein neues Getränk, insbesondere ein neues Getränk mit anregender Wirkung, auf Basis von Coffein, Ascorbinsäure, Eisen in ionischer und/oder komplex gebundener Form, organischen und anorganischen Genußsäuren, Mineralsalzen, Süßstoffen, Hilfsstoffen, Vitaminen und Aromen sowie Wasser, welches Getränk die genannten Stoffe in einer homogenen Mischung oder Lösung enthält, welches dadurch gekennzeichnet ist, daß es zumindest eine - ein nachhaltiges Wohlbefinden einer das Getränk zu sich nehmenden Person generierende - synergetisch wirksame, systemische Kombination der drei Kern-Komponenten: Coffein, Ascorbinsäure und Eisen
enthält, in welcher Kombination als zusätzliche, also vierte, Kern-Komponente 3,5,5-Trimethylhexanal integriert ist, wobei die genannten vier Kern-Komponenten, jeweils bezogen auf 1 Liter Getränk, in folgenden Zusammensetzungs-Verhältnissen zueinander vorliegen:

| | | | |
|---|---|---|---|
| Coffein | 100 mg/l | bis | 180 mg/l |
| Ascorbinsäure | 200 mg/l | bis | 350 mg/l |
| Eisen | 5 mg/l | bis | 10 mg/l |
| 3,5,5 - Trimethylhexanal | 0,5 µl/l | bis | 1,5 µl/l. |

Die spezielle, das Wirksamkeits-Zentrum des neuen Getränkes bildende Kombination aus Coffein in relativ geringen Mengen Eisen, Ascorbinsäure und dem Stoff 3,5,5-Trimethylhexanal, der lebensmittelzugelassen ist, bewirkt beim Konsumenten in normalen Mengen, also etwa in Mengen bis zu 1 Liter pro Tag zugeführt, ein Wohlgefühl mit gleichzeitig gesteigerter Aktivitätsfreude, erhöhter Aufmerksamkeit und verbesserter Konzentrationsfähigkeit, ohne daß die unangenehmen Nebenwirkungen des Coffeins, wie z.B. Nervosität oder Schlafstörungen eintreten. Wie ausführliche Versuche gezeigt haben, wird der Stoff 3,5,5-Trimethylhexanal im Getränk von den Konsumenten nur dann bewußt wahrgenommen, wenn sie diesen zuvor als Reinstoff kennengelernt haben. Dennoch wird 3,5,5-Trimethylhexanal in den angewandten geringen Konzentrationen vom limbischen System, also den funktionell verknüpften Gruppen von stammesgeschichtlich älteren Kern- und Rindenbereichen des Gehirns apperzipiert bzw. wahrgenommen. Das limbische System steht in Zusammenhang mit Emotionen, vegetativen Reaktionen sowie Gedächtnisleistungen und wird nicht rationell gesteuert.

Es stellte sich in zahlreichen Versuchen heraus, daß diese erwünschte Grund-Wirkung durch sorgfältig abgestimmte Mengen der Co-Komponenten Coffein und Ascorbinsäure erheblich verstärkt wurde. Ebenso konnte festgestellt werden, daß das zugeführte Eisen die Dauer der Wirkung erheblich zu verbessern imstande war.

Zusammenfassend ist festzustellen, daß zwar der im erfindungsgemäßen Getränk vorgesehene, tatsächlich wirkungsinduzierende und -wesentliche Stoff das 3,5,5-Trimethylhexanal ist, daß aber dessen positive Wirkung bezüglich Wohlbefinden ohne das Zusammenwirken mit Coffein, Ascorbinsäure und Eisen zwar durchaus auch eintrat, daß die Wirkung aber unter synergistischer Mitwirkung der erwähnten Substanzen wesentlich gesteigert wurde, womit auch der Anteil der einen positiven Wohlbefindenseffekt tatsächlich auch als solchen empfindenden und schätzenden Personen anstieg.

Für die genannte Wohlbefindenswirkung durchaus nicht unwichtig sind, wie sich herausgestellt hat, auch die Mengenverhältnisse der einzelnen Kern-Komponenten zueinander: Es hat sich gezeigt, daß bei Über- oder Unterschreiten der angegebenen Grenzen der Konzentrationsbereiche dieser Kern-Komponenten keine Wirkungssteigerung oder aber oft sogar ein durchaus bemerkenswertes Absinken der Wirkung zu beobachten ist.

So brachte z.B. eine Erhöhung der Menge einer oder mehrerer der einzelnen Komponenten keine weiteren Verbesserungen. Coffein in erhöhter Menge erwies sich beispielsweise sogar als geradezu kontraproduktiv.

Durchaus unterstützend im Sinne der Wohlbefindens- und Anregungswirkung ist, wie sich zeigte, das Vorhandensein von an sich für Getränkezubereitung bekannten Salzen von Natrium, Magnesium, Calcium, Kalium und Eisen sowie zusätzlich von Zink, wobei das Zink besonders hervorzuheben ist, da es bekannt ist, daß im wesentlichen in allen Bevölkerungsschichten ein durchaus bedenklicher Mangel an dem Spurenelement Zink besteht.

Eine volle Entfaltung der eutonischen Wirkung des Getränkes bei gleichzeitiger Nachhaltigkeit des durch seinen Konsum angestiegenen Leistungsfähigkeitsniveaus läßt sich bei Anwesenheit der im **Anspruch 2** individuell angeführten Kern-Komponenten und zusätzlichen Komponenten, wie insbesondere Salze erzielen, wobei insbesondere für die Effektivität des Transportes im Körper und die Akzeptanz der Komponenten auch die bei den Salzen ausgewählten Anionen durchaus eine Rolle spielen. Es soll jedoch auch der Einfluß der Mengenverhältnisse dieser Salze zueinander keineswegs vernachlässigt werden. Auf die zusammen mit den Gehalten an Coffein und Ascorbinsäure als synergetisch erkannte Wirksamkeit von Eisensalzen ist schon weiter oben gesondert hingewiesen worden.

Selbstverständlich wird von einem Getränk, auch wenn es sich nicht um ein rein durstlöschendes Getränk handelt, vom Konsumenten ein Wohlgeschmack erwartet, wobei selbstverständlich auch auf die Erwartungen und Wünsche von jüngeren Konsumenten, wie Kindern, Rücksicht zu nehmen ist.

In diesem Sinne ist in dem neuen anregenden Getränk die Anwesenheit der im **Anspruch 3** genannten natürlichen und künstlichen Süßmittel, sowie deren Additive, in den dort angegebenen Mengenverhältnissen besonders vorteilhaft.

Um eine anregend erfrischende Wirkung sicherzustellen und den pH-Wert des Getränkes in einen jeweils gewünschten Bereich zu bringen, ist ein Gehalt desselben, an zumindest drei der im **Anspruch 4** genannten lebensmittelzugelassenen Säuren, vorteilhafterweise innerhalb des dort genannten Gesamt-Konzentrationsbereiches, besonders günstig.

Bevorzugt ist es weiters, den pH-Wert des neuen eutonisch wirksamen Getränkes innerhalb der im **Anspruch 5** genannten Grenzen einzustellen und ihn bis zu dessen Konsum auch zu halten.

Unter anderem als eine Art Antagonisten des insbesondere auf das Nervensystem einwirkenden Coffeins werden in das erfindungsgemäße Getränk vorteilhafterweise die Vitamine der im **Anspruch 6** genannten Gruppe, in den dort genannten Mengenverhältnissen eingebracht.

Was die Akzeptanz des neuen Getränkes durch den Konsumenten wesentlich unterstützt und ihm unter Umständen auch noch im Rahmen eines ihm jeweils verliehenen Hauptgeschmackes bestimmte Untertöne zu verleihen imstande ist, sind die in ihm vorhandenen natürlichen und/oder naturidenten Aromen, meist Fruchtaromen, gemäß **Anspruch 7**. Zu den im Anspruch 7 erhaltenen Angaben ist zu bemerken, daß spezifiziert genaue Angaben über Qualität und relative Quantität der Aromen im fertigen Getränk nicht möglich sind und sich diese Parameter und Parameterverhältnisse mit einer jeweiligen Geschmacksmode manchmal rasch verändern, wobei einem solchen Wechsel im Konsumentengeschmack möglichst unmittelbar und flexibel Rechnung zu tragen ist.

An dieser Stelle soll nicht unerwähnt bleiben, daß auch das in der Kern-Komposition mit den Co-Komponenten Coffein, Ascorbinsäure und Eisenionen als wesentliche und unerwartete Wohlbefindenswirkung generierende Substanz vorgesehene 3,5,5-Trimethylhexanal im wesentlichen einen Aromastoff darstellt. Dessen eigener Geschmack, Geruch und/oder Aroma kann etwa als "diffus, trocken und grasartig" bezeichnet werden. Bei den weiter oben schon genannten Mengengehalten von 0,5 bis 1,5 mg pro I Getränk hebt dieser für einen beim Genuß als Einzelsubstanz wenig attraktive Aromastoffe überraschenderweise den Gesamteindruck des jeweils vorgesehenen Geschmacks bzw. Geruchs des neuen Getränkes in unerwartet angenehmer Weise, ohne jedoch aufdringlich durchzuschlagen. Was aber noch wesentlicher und eben völlig unerwartet war und die vorliegende Erfindung trägt, ist die eklatante, das Wohlbefinden spürbar steigernde Wirkung des 3,5,5-Trimethylhexanals, dessen Kenndaten die folgenden sind: Summenformel C₉H₁₈O, Kp: 67-68°/25 mm, Fp : 116°F, d=0,817 g/cm³, FEMA-Nr. 3524.

Eine unmittelbar erfrischende Wirkung des neuen Getränkes kann mit Kohlensäuregehalten im Rahmen der im **Anspruch 8** genannten Mengenbereiche erzielt werden.

Ist eine Verabreichung des neuen Getränkes an Kinder im Alter von, z.B. unter 14 Jahren, vorgesehen, so ist eine Absenkung des Coffeingehaltens auf aus dem **Anspruch** 9 hervorgehende Werte zu empfehlen. Gerade bei Kindern konnte auch ohne Coffein im Getränk eine arbeits- und luststeigernde Wirkung beobachtet werden.

Eine insbesondere gedächtnisstützende Wirkung ausübende Gabe von Gingkoextrakt, wie sie gemäß **Anspruch 10** vorgesehen ist, kann das eutonische Wirkungsspektrum des neuen Getränks noch in günstiger Weise abrunden.

Zusammenfassend ist festzuhalten, daß das neue Getränk in seiner Grundversion in gleicher Weise wie in einer der vorerwähnten bevorzugten Variationen zwar durchaus anregende, die körperliche und geistige Leistungsfähigkeit steigernde und die Aufmerksamkeit und Konzentrationsfähigkeit hebende Wirkung hat, aber keineswegs als "Energy drink" od.dgl. mit etwa explosionsartig rascher oder aufputschender Wirksamkeit zu bezeichnen ist. Dem neuen Getränk fehlen nicht nur die oft subjektiv als unangenehm empfundenen Nebenwirkungen, wie z.B. Nervosität, Kribbeligkeit, Schlafstörungen u.dgl., vielmehr ist es imstande, das von ihm hervorgerufene Wohlbefinden nebenwirkungsfrei bewußt zu empfinden, Unlustgefühle werden verdrängt. Diese angenehme Wirkung hält dann auch für längere Zeit an.

Im Sinne einer Wohlgeschmack und Anregung hebenden Wirkung kann weiters - siehe dazu den **Anspruch 11** - ein Gehalt an Grüntee-Extrakt beitragen. Eine solche Zugabe kann sogar den Vorteil einer krebshemmenden Wirkung haben.

Einen weiteren Gegenstand der Erfindung stellt ein Verfahren zur Herstellung des neuen Getränkes mit den wesentlichen Merkmalen dar, die darin bestehen, daß in einen Strom des die Grundlage des Getränkes bildenden Wassers zuerst ein Strom eines ersten Teil-Konzentrates mit einem oder mehreren Süß- und Hilfsstoffen, Aromen, Fruchtaromen und der vierten Kern-Komponente 3,5,5-Trimethylhexanal zugeführt und in das Wasser in turbulenter Strömung eingemischt wird, wonach ein zweiter Strom eines zweiten Teil-Konzentrates, welches die drei Kern-Komponenten Coffein, Ascorbinsäure und Eisen-Verbindungen sowie organische und anorganische Genußsäuren, Salze und Vitamine umfaßt, dem Strom des intensiven Gemisches von Wasser und erstem Teil-Konzentrat zugeführt und in denselben in turbulenter Strömung bis zur vollständigen Homogenisierung aller Komponenten eingemischt wird. Die hier beschriebene Zweiteilung des Konzentrats ist produktionstechnisch vorteilhaft und führt zu einem äußerst lagerungs-stabilen Getränk.

Der **Anspruch 13** gibt ein für die Herstellung bevorzugt zu wählendes Verhältnis der Gesamtmenge der Teil-Konzentrate zur Menge des Wassers im neuen Getränk wieder.

Gegenstand der Erfindung ist weiters ein - dem letztlich in Flaschen, Dosen, Container od.dgl. abgefüllten und für den Konsum vorgesehenen, fertigen Getränk zugrundeliegendes - Konzentrat, das dem Getränkeerzeuger und -abfüller zur Verfügung gestellt wird.

Dieses Konzentrat besteht, wie aus dem **Anspruch 14** hervorgeht, aus zwei getrennt vorliegenden Teilkonzentraten, von denen eines zuerst in das für das Getränk vorgesehene Wasser eingetragen und dort homogen eingemischt wird. Dann wird zeitlich folgend das andere Teil-Konzentrat in das das erste Teilkonzentrat schon verdünnt und zumindest weitgehend homogenisiert enthaltende Wasser eingebracht, wo dann die Finalisierung zum Getränk durch intensives weiteres Mischen und vollständig gleichmäßiges Verteilen der Komponenten erfolgt.

Diese an sich nicht unübliche Teilung des Konzentrates hat den Vorteil, daß ein eventuelles Ausfallen einzelner Komponenten im fertigen Getränk und das Auftreten von Inhomogenitäten, unerwünschten Trübungen u.dgl. verhindert wird.

Im Rahmen der Erfindung besonders bevorzugt sind Konzentrate mit den im **Anspruch 15** genannten, sich aus den voranliegend beschriebenen Ausführungsvarianten ableitenden Konzentrationsmengen.

### Beispiel:

Es wurde in einem Mischgefäß mit Rührwerk mit den Konzentrationsmengen der Komponenten gemäß Tabelle 1 100 Liter des neuen Getränkes bereitet.

**Tabelle 1**

| **Teil-Konzentrat 1** Fruchtaromenmischung *) (3 Komponenten) | MENGE pro Liter Getränk | | **Teil-Konzentrat 2** | MENGE pro Liter Getränk | |
|---|---|---|---|---|---|
| Grundrichtung "herb" | 6,7 | µl | Organische Säure 1 ***) | 3,6 | g |
| Dextrose | 22 | g | Anorg. Säure (Phosphorsäure) | 0,5 | g |
| Fructose | 28 | g | Tri-Natrium-Citrat | 1,5 | g |
| Naringin (Bitterstoff) | 29 | mg | Magnesiumchlorid-Hexahydrat | 1,6 | g |
| Pektin | 105 | mg | Calciumchlorid-Dihydrat | 1,2 | g |
| Aspartam | 75 | mg | Kaliumhydrogenphosphat | 350 | mg |
| Aromenmischung **) (6 Komponenten) Grundrichtung: fruchtig, exotisch | 512 | µl | Natnumchlorid | 220 | mg |
| 3,5,5-Trimethylhexanal | 1,3 | µl | Eisen (III)-oxidsaccharat | 82 | mg |
| | | | (Merck) (Fe) | (8) | |
| | | | Zinksulfat-Heptahydrat | 33 | mg |
| | | | Coffein | 160 | mg |
| | | | Ascorbinsäure | 310 | mg |
| | | | Vit. B6 | 1,9 | mg |
| | | | Vit. B1 | 0,7 | mg |
| | | | Vit. B2 | 0,8 | mg |
| Die Summe aller o.a. Stoffe fertig gelöst incl. Wasser = 75 ml (unter Druck homogenisiert) | | | Die Summe aller o.a. Stoffe fertig gelöst incl. Wasser = 25 ml (bei leicht erhöhter Temperatur homogenisiert) | | |

| | | | | | |
|---|---|---|---|---|---|
| * alle Aromen naturident (Grünewald) | | | | | |
| ** 6 natürliche Aromen 1, naturidentes Aroma (alle von Firmenich) | | | | | |
| ***Gemisch: Citronensäure, Weinsäure, Apfelsäure etwa 1:1:1 | | | | | |

Grundlage waren 97,5 Liter Trinkwasserqualität aufweisendes Grundwasser mit einer Gesamthärte von 12 dH. 1250 ml des vorher sorgfältig mit dem gleichen Wasser bereiteten und homogenisierten Teil-Konzentrates 1 wurden unter Rühren binnen 3 min in das Gesamtvolumen des Wassers eingebracht und es wurde noch 5 min nachgerührt.

Danach wurden aus einem zweiten Konzentratgefäß in gleicher Weise homogenisiertes Teil-Konzentrat 2 binnen 3 min eingerührt und die gesamte so erhaltene Mischung wurde ebenfalls noch 5 min lang nachgerührt. Die Temperatur des fertigen Getränkes betrug 17°C. Das Getränk wurde unter Sterilbedingungen in 0,5 Liter Glasflaschen abgezogen, welche jeweils mit einem Kronenkorkverschluß versehen wurden, die Aufbewahrung erfolgte bei 11°C.

In einem orientierenden Kleinversuch wurden 22 Personen im Alter zwischen 17 und 50 Jahren (1 Person war 63 Jahre alt) jeweils vier 0,5 Liter Flaschen des in seiner Zusammensetzung aus Tabelle 1 ersichtlichen, neueren Getränkes zur Verfügung gestellt mit der Bedingung die entsprechenden Halbliterportionen innerhalb von drei Tagen zu konsumieren und nach Verspüren einer Wirkung diese individuell und subjektiv nach folgender Skala

| | |
|---|---|
| 0 | keine Wirkung verspürt, |
| 1 | Wirkung verspürt, |
| 2 | starke Wirkung verspürt und |
| -1 | negative Wirkung verspürt zu bewerten und in einem Testprotokollbogen einzutragen. Dabei waren folgende Kategorien des subjektiven Empfindens zu bewerten: |
| a | "fühle mich nach dem Trinken wohler/ausgeglichener" |
| b | "tue mir nach dem Trinken beim Arbeiten/Lernen leichter" |
| c | "fühle mich nach dem Trinken nervös/angespannt/unruhig" |

Die folgende Tabelle 2 zeigt die Ergebnisse des Tests, wobei die Zahlen jeweils die Anzahl der Testpersonen für eine Bewertungsnote angibt.

**Tabelle 2**

| **Gabe** | **1.** | | | | **2.** | | | | **3.** | | | | **4.** | | | |
|---|---|---|---|---|---|---|---|---|---|---|---|---|---|---|---|---|
| Wirkung, Note | **-1** | **0** | **1** | **2** | **-1** | **0** | **1** | **2** | **-1** | **0** | **1** | **2** | **-1** | **0** | **1** | **2** |

| Kategorie | Anzahl der Personen | | | | | | | | | | | | | | | |
|---|---|---|---|---|---|---|---|---|---|---|---|---|---|---|---|---|
| a | **2** | **4** | **12** | **4** | **0** | **5** | **12** | **3** | **2** | **4** | **9** | **7** | **0** | **3** | **8** | **12** |
| b | **0** | **6** | **10** | **6** | **2** | **4** | **7** | **9** | **0** | **3** | **10** | **9** | **1** | **4** | **8** | **9** |
| c | **4** | **13** | **4** | **1** | **5** | **15** | **2** | **0** | **6** | **14** | **1** | **1** | **3** | **18** | **0** | **1** |

Selbstverständlich kann diese Testserie mit einer geringen Zahl von Testpersonen nicht absolut repräsentativen, sondern nur informellen Charakter haben, sie bestätigt jedoch durchaus die mit großer Mehrheit als positiv empfundene Wirkung des neuen Getränkes etwa im Sinne einer Erhöhung des Wohlbefindens bei gleichzeitig angehobener Leistungsfähigkeit.

Was die Dauer der subjektiven Wohlbefindenswirkung des neuen Getränkes betrifft, hat die Auswertung der Ergebnisse einer entsprechenden Testfrage einen Durchschnittwert von über 1 Stunde ergeben.

## Patentansprüche

1. Getränk mit anregender Wirkung auf Basis von Coffein, Ascorbinsäure, Eisen in ionischer und/oder komplex gebundener Form, organischen und anorganischen Genußsäuren, Mineralsalzen, Süßstoffen, Hilfsstoffen, Vitaminen und Aromen sowie Wasser, welches Getränk die genannten Stoffe in einer, bevorzugt homogenen, Mischung oder Lösung enthält, **dadurch gekennzeichnet**, daß es zumindest eine - ein nachhaltiges Wohlbefinden einer das Getränk zu sich nehmenden Person generierende - synergetisch wirksame, systemische Kombination der drei Kern-Komponenten: Coffein, Ascorbinsäure und Eisen enthält, in welcher Kombination als zusätzliche, also vierte Kern-Komponente 3,5,5-Trimethylhexanal integriert ist, wobei die genannten vier Kern-Komponenten, jeweils bezogen auf 1 Liter Getränk, in folgenden Zusammensetzungs-Verhältnissen zueinander vorliegen
| | | | |
|---|---|---|---|
| Coffein | 100 mg/l | bis | 180 mg/l |
| Ascorbinsäure | 200 mg/l | bis | 350 mg/l |
| Eisen | 5 mg/l | bis | 10 mg/l |
| 3,5,5 - Trimethylhexanal | 0,5 µl/l | bis | 1,5 µl/l. |

2. Getränk nach Anspruch 1, **dadurch gekennzeichnet**, daß es zusätzlich zu den dort genannten vier Kern-Komponenten in den dort genannten Mengenverhältnissen als Ergänzungs-Komponenten an sich bekannte Salze aus der Gruppe: Trinatriumcitrat, Natrium-, Magnesium- und Calciumchlorid, Kaliumdihydrogenphosphat, Eisensalz als Eisen(III)oxidsaccharat und Zinksulfat enthält, wobei diese Salze, jeweils bezogen auf 1 Liter Getränk, in folgenden Zusammensetzungs-Verhältnissen vorliegen:
| | Menge pro Liter Getränk | |
|---|---|---|
| Tri-Natrium Citrat | 1,0 - 2,0 | g |
| Magnesiumchlorid-Hexahydrat | 1,0 - 2,0 | g |
| Calciumchlorid Dihydrat | 0,5 - 1,5 | g |
| Kaliumdihydrogenphosphat | 100 - 450 | mg |
| Natriumchlorid | 100 - 400 | mg |
| Eisen (III)-oxidsaccharat (Merck) | 50 - 100 | mg |
| Zinksulfat-Heptahydrat | 20 - 40 | mg |

3. Getränk nach Anspruch 2, **dadurch gekennzeichnet**, daß das Getränk als Süß- und Hilfsstoffe Dextrose, Fructose, Saccharose, Aspartam und Pektin enthält, wobei diese Stoffe in folgenden, jeweils auf 1 Liter Getränk bezogenen Zusammensetzungs-Verhältnissen vorliegen:
| | Menge pro Liter Getränk | |
|---|---|---|
| Dextrose | 13 - 30 | g |
| Fructose | 18 - 32 | g |
| Pektin | 40 - 120 | mg |
| Aspartam | 50 - 120 | mg |
und daß es schließlich einen Bitterstoff, bevorzugt Naringin in einer Menge von 10 bis 35 mg pro Liter Getränk enthält.

4. Getränk nach einem der Ansprüche 1 bis 3, **dadurch gekennzeichnet**, daß es zumindest eine organische Genußsäure, ausgewählt aus der Gruppe Citronensäure, Weinsäure, Äpfelsäure und Milchsäure, enthält, wobei diese Genußsäuren in einer Gesamtmenge im Bereich von 1,4 bis 6g pro Liter Getränk vorliegen, und Phosphorsäure in einer Menge von 0,4 bis 0,9 g pro Liter Getränk, enthält.

5. Getränk nach einem der Ansprüche 1 bis 4, **dadurch gekennzeichnet**, daß es einen pH-Wert im Bereich von 2,5 bis 3 aufweist.

6. Getränk nach einem der Ansprüche 1 bis 5, **dadurch gekennzeichnet**, daß es die Vitamine B1, B2 und B6 enthält und zwar in einer Gesamtmenge von 1,5 bis 5,0 mg, pro Liter Getränk.

7. Getränk nach einem der Ansprüche 1 bis 6, **dadurch gekennzeichnet**, daß es mindestens zwei natürliche oder naturidente Aromen oder Fruchtaromen in einer Gesamtmenge von 400 bis 1400 µl Aromenkonzentrat pro Liter Getränk, enthält.

8. Getränk nach einem der Ansprüche 1 bis 7, **dadurch gekennzeichnet**, daß es einen Gehalt an Kohlensäure von 5 bis 7g pro Liter Getränk aufweist.

9. Getränk nach einem der Ansprüche 1 bis 8, **dadurch gekennzeichnet**, daß es für den Konsum durch Kinder so abgeändert ist, daß es einen Coffeingehalt von 5 bis 30 mg pro Liter Getränk, aufweist.

10. Getränk nach einem der Ansprüche 1 bis 9, **dadurch gekennzeichnet**, daß es zusätzlich zu den dort genannten Komponenten, bezogen auf 1 Liter Getränk, bis zu 0,05 bis 0,15 ml eines Gingkoextraktes mit einem Gehalt von etwa 10 mg/Ginkoflavonglycosiden pro ml enthält.

11. Getränk nach einem der Ansprüche 1 bis 10, **dadurch gekennzeichnet**, daß es zusätzlich zu den jeweils dort genannten Komponenten, bezogen auf 1 Liter Getränk, zwischen 200 und 1000 mg, vorzugsweise zwischen 200 bis 800 mg Grüntee-Extrakt enthält.

12. Verfahren zur Herstellung eines Getränkes nach einem der Ansprüche 1 bis 11, **dadurch gekennzeichnet**, daß in einen Strom des die Grundlage des Getränkes bildenden Wassers zuerst ein Strom eines ersten Teil-Konzentrates mit einem oder mehreren Süß- und Hilfsstoffen, Aromen, Fruchtaromen und der vierten Kern-Komponente 3,55-Trimethylhexanal zugeführt und in das genannte Wasser in turbulener Strömung eingemischt wird, wonach ein zweiter Strom eines zweiten Teil-Konzentrates, welches die drei Kern-Komponenten Coffein, Ascorbinsäure und Eisen-Verbindungen sowie organische und anorganische Genußsäuren, Salze und Vitamine umfaßt, dem Strom des intensiven Gemisches von Wasser und erstem Teil-Konzentrat zugeführt und in denselben in turbulenter Strömung bis zur vollständigen Homogenisierung aller Komponenten eingemischt wird.

13. Verfahren nach Anspruch 12, **dadurch gekennzeichnet**, daß das erste und das zweite Teil-Konzentrat jeweils in zu den im Anspruch 3 genannten Mengen der Komponenten pro Liter Getränk führenden Mengen in den Strom des die Getränke-Grundlage bildenden Wassers jeweils in einer Gesamt-Volumsmenge von 100 ml erstes plus zweites Teil-Konzentrat pro Liter fertiges Getränk eingebracht werden.

14. Konzentrat-Kombination für die Herstellung eines Getränkes mit einer Zusammensetzung gemäß einem der Ansprüche 1 bis 11 mit den dort genannten Komponenten und deren Mengenverhältnissen, **dadurch gekennzeichnet**, daß sie zwei mit dem Wasser als Grundlage für das genannte Getränk zu vereinigende Teil-Konzentrate umfaßt, deren erstes Teil-Konzentrat die jeweils mit Süß- und Hilfsstoffen, Aromen, insbesondere Fruchtaromen und der vierten Kern-Komponente 3,5,5-Trimethylhexanal gebildet ist und deren zweites Teil-Konzentrat die drei Kern-Komponenten Coffein, Ascorbinsäure und Eisen-Verbindungen sowie organische und anorganische Genußsäuren, Salze und Vitamine enthält, wobei die Mengenverhältnisse der Kern-Komponenten und der zusätzlichen Komponenten zueinander im ersten und zweiten Konzentrat, den in einem der Ansprüche 1 bis 11 angegebenen Mengenbereichen bzw. Mengenverhältnissen entsprechen.

15. Konzentrat-Kombination gemäß Anspruch 14, **dadurch gekennzeichnet**, daß das erste und das zweite Teil-Konzentrat die in ihm vorliegenden Komponenten in den jeweils auf 1 Liter Getränk bezogenen Mengen, in einer jeweils für die Bereitung von 1 Liter fertiges Getränk vorgesehenen Gesamt-Volumsmenge beider Teil-Konzentrate von 100 ml enthalten.

## Claims

1. A beverage with a stimulating effect based on caffeine, ascorbic acid, iron in ionic and/or complexed form, organic and inorganic food acids, mineral salts, sweeteners, auxiliary agents, vitamins, flavourings and waiter, said beverage comprising the aforementioned substances in a preferably homogeneous mixture or solution, **characterised in that** it comprises at least one synergetically effective, systemic combination of the three core constituents caffeine, ascorbic acid and iron, this combination generating a sustained feeling of well-being in a person drinking the beverage, and an additional, i.e. fourth core constituent 3,5,5-trimethylhexanal being incorporated into this combination, the four named core constituents being present in the following compositional proportions, in each case based on 1 litre of beverage:
| | | | |
|---|---|---|---|
| caffeine | 100 mg/l | to | 180 mg/l |
| ascorbic acid | 200 mg/l | to | 350 mg/l |
| iron | 5 mg/l | to | 10 mg/l |
| 3,5,5-trimethylhexanal | 0.5 µl/l | to | 1.5 µl/l. |

2. A beverage according to claim 1, **characterised in that**, in addition to the four core constituents referred to therein in the proportions referred to therein, it contains, as supplementary constituents, known salts from the group: trisodium citrate, sodium, magnesium and calcium chloride, potassium dihydrogen phosphate, iron salt as iron(III) oxide saccharate and zinc sulphate, these salts being present in the following compositional proportions, in each case based on 1 litre of beverage:
| | amount per litre of beverage |
|---|---|
| trisodium citrate | 1.0 - 2.0 g |
| magnesium chloride hexahydrate | 1.0 - 2.0 g |
| calcium chloride dihydrate | 0.5 - 1.5 g |
| potassium dihydrogen phosphate | 100 - 450 mg |
| sodium chloride | 100 - 400 mg |
| iron(III) oxide saccharate (Merck) | 50 - 100 mg |
| zinc sulphate heptahydrate | 20 - 40 mg |

3. A beverage according to claim 2, **characterised in that** the beverage contains dextrose, fructose, saccharose, aspartame and pectin as sweeteners and auxiliary agents, these substances being present in the following compositional proportions, in each case based on 1 litre of beverage:
| | amount per litre of beverage |
|---|---|
| dextrose | 13 - 30 g |
| fructose | 18 - 32 g |
| pectin | 40 - 120 mg |
| aspartame | 50 - 120 mg |
and in that lastly it contains a bitter substance, preferably naringin, in an amount of 10 mg to 35 mg per litre of beverage.

4. A beverage according to any one of claims 1 to 3, **characterised in that** it contains at least one organic food acid selected from the group comprising citric acid, tartaric acid, malic acid and lactic acid, these food acids being present in an overall amount in the range from 1.4 g to 6 g per litre of beverage, and contains phosphoric acid in an amount from 0.4 g to 0.9 g per litre of beverage.

5. A beverage according to any one of claims 1 to 4, **characterised in that** it has a pH in the range from 2.5 to 3.

6. A beverage according to any one of claims 1 to 5, **characterised in that** it contains the vitamins B1, B2 and B6 in an overall amount from 1.5 mg to 5.0 mg per litre of beverage.

7. A beverage according to any one of claims 1 to 6, **characterised in that** it contains at least two natural or nature-identical flavourings or fruit flavourings in an overall amount from 400 µl to 1400 µl of flavour concentrate per litre of beverage.

8. A beverage according to any one of claims 1 to 7, **characterised in that** it has a carbon dioxide content of 5 g to 7 g per litre of beverage.

9. A beverage according to any one of claims 1 to 8, **characterised in that**, for consumption by children, it is modified so as to have a caffeine content of 5 mg to 30 mg per litre of beverage.

10. A beverage according to any one of claims 1 to 9, **characterised in that**, in addition to the constituents referred to therein, based on 1 litre of beverage, it contains up to 0.05 ml to 0.15 ml of a gingko extract with a content of approximately 10 mg of gingko flavone glycosides per ml.

11. A beverage according to any one of claims 1 to 10, **characterised in that**, in addition to the constituents referred to therein, based on 1 litre of beverage, it contains between 200 mg and 1000 mg, preferably between 200 mg and 800 mg of green tea extract.

12. A process for the preparation of a beverage according to any one of claims 1 to 11, **characterised in that** first a stream of a first partial concentrate, comprising one or more sweeteners and auxiliary agents, flavourings, fruit flavourings and the fourth core constituent 3,5,5-trimethylhexanal, is supplied to a stream of the water forming the basis of the beverage and is mixed into said water in turbulent flow, after which a second stream of a second partial concentrate, comprising the three core constituents caffeine, ascorbic acid and iron compounds and also organic and inorganic food acids, salts and vitamins, is supplied to the stream of the intimate mixture of water and first partial concentrate and is mixed into the same in turbulent flow until complete homogenisation of all the constituents.

13. A process according to claim 12, **characterised in that** the first and the second partial concentrate, in each case in amounts resulting in the amounts of the constituents per litre of beverage as set out in claim 3, are each introduced into the stream of the water forming the basis of the beverage in an overall volume of 100 ml of first plus second partial concentrate per litre of finished beverage.

14. A concentrate combination for the preparation of a beverage having a composition according to any one of claims 1 to 11 with the constituents and proportions thereof referred to therein, **characterised in that** it comprises two partial concentrates to be combined with the water as a basis for the said beverage, of which the first partial concentrate is formed by sweeteners and auxiliary agents, flavourings, in particular fruit flavourings, and the fourth core constituent 3,5,5-trimethylhexanal and of which the second partial concentrate comprises the three core constituents caffeine, ascorbic acid and iron compounds and also organic and inorganic food acids, salts and vitamins, the ratios of the core constituents and the additional constituents to one another in the first and the second concentrate corresponding to the quantity ranges and ratios set out in any one of claims 1 to 11.

15. A concentrate combination according to claim 14, **characterised in that** the first and the second partial concentrate comprise their respective constituents, in the amounts based on 1 litre of beverage, in an overall volume of both partial concentrates of 100 ml provided for the preparation of 1 litre of finished beverage.

## Revendications

1. Boisson à effet excitant à base dè caféine, d'acide ascorbique, de fer sous forme ionique et/ou complexée, d'acides alimentaires organiques et inorganiques, de sels minéraux, d'édulcorants, d'adjuvants, de vitamines, d'arômes ainsi que d'eau, ladite boisson contenant les substances précitées en solution ou mélange de préférence homogène, **caractérisée en ce qu**'elle contient au moins une combinaison systémique à effet synergétique des trois composants-clés que sont la caféine, l'acide ascorbique et le fer, qui génère chez l'individu absorbant la boisson une sensation durable de bien-être et dans laquelle est intégré, en tant que composant-clé supplémentaire et donc en tant que quatrième composant-clé, du 3,5,5-triméthylhexanal, les quatre composants-clés précités étant respectivement présents dans les dosages suivants, rapportés à 1 litre de boisson :
| | | | |
|---|---|---|---|
| Caféine | 100 mg/l | à | 180 mg/l |
| Acide ascorbique | 200 mg/l | à | 350 mg/l |
| Fer | 5 mg/l | à | 10 mg/l |
| 3,5,5-triméthylhexanal | 0,5 µl/l | à | 1,5 µl/l |

2. Boisson selon la revendication 1, **caractérisée en ce qu**'outre les quatre composants-clés précités présents selon la composition précitée, elle contient, en tant que composant complémentaire, des sels connus en soi appartenant au groupe : citrate trisodique, chlorure de sodium, de magnésium et de calcium, dihydrogénophosphate de potassium, sel ferrique sous la forme de saccharate d'oxyde ferrique et sulfate de zinc, ces sels étant respectivement présents dans les dosages suivants, rapportés à 1 litre de boisson :
| Quantité par litre de boisson | |
|---|---|
| Citrate trisodique | 1,0 à 2,0 g |
| Chlorure de magnésium hexahydraté | 1,0 à 2,0 g |
| Chlorure de calcium dihydraté | 0,5 à 1,5 g |
| Dihydrogénophosphate de potassium | 100 à 450 mg |
| Chlorure de sodium | 100 à 400 mg |
| Saccharate d'oxyde ferrique (Merck) | 50 à 100 mg |
| Sulfate de zinc heptahydraté | 20 à 40 mg |

3. Boisson selon la revendication 2, **caractérisée en ce qu**'elle contient, en tant qu'édulcorants et adjuvants, du dextrose, du fructose, du saccharose, de l'aspartame et de la pectine, ces substances étant respectivement présentes dans les dosages suivants, rapportés à 1 litre de boisson :
| | Quantité par litre de boisson |
|---|---|
| Dextrose | 13 à 30 g |
| Fructose | 18 à 32 g |
| Pectine | 40 à 120 mg |
| Aspartame | 50 à 120 mg |
et en ce qu'elle contient enfin un principe amer, de préférence de la naringine à raison de 10 à 35 mg par litre de boisson.

4. Boisson selon l'une des revendications 1 à 3, **caractérisée en ce qu**'elle contient au moins un acide alimentaire organique, sélectionné dans le groupe constitué par l'acide citrique, l'acide tartrique, l'acide malique et l'acide lactique, ces acides alimentaires étant présents à raison globalement d'environ 1,4 à 6 g par litre de boisson, ainsi que de l'acide phosphorique à raison de 0,4 à 0,9 g par litre de boisson.

5. Boisson selon l'une des revendications 1 à 4, **caractérisée en ce qu**'elle présente un pH compris entre 2,5 et 3.

6. Boisson selon l'une des revendications 1 à 5, **caractérisée en ce qu**'elle contient les vitamines B1, B2 et B6 à raison globalement de 1,5 à 5,0 mg par litre de boisson.

7. Boisson selon l'une des revendications 1 à 6, **caractérisée en ce qu**'elle contient au moins deux arômes ou arômes de fruit naturels ou artificiels à raison globalement de 400 à 1400 µl de concentré d'arômes par litre de boisson.

8. Boisson selon l'une des revendications 1 à 7, **caractérisée en ce que** sa teneur en acide carbonique est comprise entre 5 et 7 g par litre de boisson.

9. Boisson selon l'une des revendications 1 à 8, **caractérisée en ce que**, lorsqu'elle est destinée à des enfants, elle est modifiée en ce sens que son dosage en caféine est compris entre 5 et 30 mg par litre de boisson.

10. Boisson selon l'une des revendications 1 à 9, **caractérisée en ce qu**'elle contient, outre les composants précités et pour un litre de boisson, jusqu'à 0,05 à 0,15 ml d'un extrait de ginkgo présentant une teneur en glycosides de flavonole d'environ 10 mg/ml.

11. Boisson selon l'une des revendications 1 à 10, **caractérisée en ce qu**'elle contient, outre les composants précités et pour 1 litre de boisson, entre 200 et 1000 mg, de préférence entre 200 et 800 mg, d'extrait de thé vert.

12. Procédé de préparation d'une boisson selon l'une des revendications 1 à 11, **caractérisé en ce que** dans un courant de l'eau formant la base de la boisson est tout d'abord ajouté et mélangé selon un écoulement tourbillonnaire un courant d'un premier concentré partiel comportant un ou plusieurs édulcorants et adjuvants, arômes, arômes de fruits et le quatrième composant-clé, le 3,5,5-triméthylhexanal, après quoi un second courant d'un second concentré partiel, comportant les trois composants-clés : caféine, acide ascorbique et composés de fer, ainsi que les acides alimentaires organiques et inorganiques, les sels et les vitamines, est ajouté au courant de mélange intensif d'eau et de premier concentré partiel, auquel il est mélangé selon un écoulement tourbillonnaire jusqu'à totale homogénéisation de l'ensemble des composants.

13. Procédé selon la revendication 12, **caractérisé en ce que** le premier et le second concentré partiel sont ajoutés au courant d'eau formant la base de la boisson dans des quantités conduisant aux quantités de composants par litre de boisson citées à la revendication 3 et dans une quantité volumique globale de 100 ml (premier plus second concentré partiel) par litre de boisson finie.

14. Combinaison de concentrés pour la préparation d'une boisson présentant une composition selon l'une des revendications 1 à 11 avec les composants et les dosages qui y sont cités, **caractérisée en ce qu**'elle comprend deux concentrés partiels à mélanger avec l'eau en tant que base de la boisson citée, le premier concentré partiel étant formé par les édulcorants et les adjuvants, les arômes, en particulier les arômes de fruit et le quatrième composant-clé, le 3,5,5-triméthylhexanal, tandis que le second concentré contient les trois composants-clés que sont la caféine, l'acide ascorbique et les composés de fer ainsi que les acides alimentaires organiques et inorganiques, les sels et les vitamines, les proportions des composants-clés par rapport aux composants additionnels dans les premier et second concentrés correspondant aux plages ou dosages cités dans l'une des revendications 1 à 11.

15. Combinaison de concentrés selon la revendication 14, **caractérisée en ce que** les premier et second concentrés partiels contiennent leurs ingrédients respectifs dans des dosages rapportés à 1 litre de boisson et selon une quantité volumique globale des deux concentrés partiels prévue pour la préparation de 1 litre de boisson finie de 100 ml.
